# EUROPÄISCHE PATENTSCHRIFT

(11) **EP 1 973 818 B1**
(45) Veröffentlichungstag und Bekanntmachung des Hinweises auf die Patenterteilung: **19.05.2010**
(21) Anmeldenummer: 07700107.1
(22) Anmeldetag: 08.01.2007
(51) Int. Cl.: B65G 35/08, B65G 15/28

(54) **FÖRDERVORRICHTUNG MIT SCHUBELEMENT**
CONVEYING APPARATUS HAVING A THRUST ELEMENT
DISPOSITIF DE TRANSPORT DOTE D'UN ELEMENT DE POUSSEE

(30) Priorität: 13.01.2006 CH 56062006
(43) Veröffentlichungstag der Anmeldung: 01.10.2008
(60) Teilanmeldung: 09008958.2
(73) Patentinhaber: WRH Walter Reist Holding AG, 8272 Ermatingen (CH)
(72) Erfinder: REIST, Walter, 8340 Hinwil (CH)
(74) Vertreter: Frei Patent Attorneys
(86) Internationale Anmeldenummer: PCT/CH2007/000009
(87) Internationale Veröffentlichungsnummer: WO 2007/079603

(56) Entgegenhaltungen:
- EP-A- 0 488 296
- DE-U1- 20 205 069
- US-A- 3 102 153

## Beschreibung

Die Erfindung bezieht sich auf das Gebiet der Fördertechnik und insbesondere auf eine Fördervorrichtung mit Schubelementen gemäss dem Oberbegriff des Patentanspruches 1.

### STAND DER TECHNIK

Bei bekannten Fördersystemen, welche Bänder oder Ketten von gleichartigen Elementen aufweisen, muss stets die Länge der Bänder oder Ketten an die Länge der Fördereinrichtung angepasst werden. Die Bänder oder Ketten müssen in die Fördereinrichtung eingefädelt werden und anschliessend zu einem umlaufenden Gebilde verbunden und gespannt werden. Bei bandähnlichen Fördereinrichtungen soll zudem eine möglichst ebene Oberfläche zur Aufnahme von zu fördernden Gegenständen gebildet werden. Ferner soll zum Bewegen der Einrichtung möglichst wenig Kraft aufzuwenden sein.

In der WO 2004/063059 A1 ist ein Fördersystem beschrieben, welches steife Lamellen mit dazwischen liegenden kompressiblen Elementen schiebend und ziehend fördert. Die kompressiblen Elemente sind in Förderrichtung vorgespannt, d.h. teilweise komprimiert, und können um Kurven geführt werden, ohne dass Lücken in der Förderfläche entstehen. Die Lamellen weisen seitlich hervorstehende Zähne auf, so dass sie durch korrespondierend geformte Zähne eines Antriebsmittels angetrieben werden können.

In der FR 143 262 wird ein schnell und einfach einsetzbares Transporthilfsmittel beschrieben, welches mehrere jeweils um eine Achse drehbare Walzenpaare aufweiset. Die Achsen sind in der Mitte durch ein flexibles Band miteinander verbunden. An den Enden weisen die Achsen jeweils Räder mit einem grösseren Durchmesser als die Walzen auf. Das Transporthilfsmittel lässt sich in beliebigen Bahnen auslegen, wonach die Walzen als Rollbahn für Lasten dienen. Mittels der Räder kann das Transporthilfsmittel auch verschoben werden.

In der WO 2005/113 391 und der WO 2005/113392 werden keine Fördersysteme, sondern Wälzlager offenbart. In diesen liegen zur Aufnahme von hohen Lastkräften umlaufende Rollen vor. Diese Rollen laufen um einen ovalen Rollenkörper und sind durch mitlaufende Körper voneinander beabstandet. Die Rollen rollen wie bei einem üblichen Wälzlager einerseits auf dem Rollenkörper und andererseits an einem Gegenkörper ab, und nehmen so eine Lastkraft zwischen Rollenkörper und Gegenkörper auf.

Die EP 0 488 296 A1 offenbart eine Fördereinrichtung, in welcher einzelne Trägerelemente, welche nicht aneinander gehängt sind, durch eine Führung geschoben werden. Die Trägerelemente weisen an den beiden Enden jeweils Rollen auf, mit welchen sie in einer Führung abrollen. Die Trägerelemente sind zylindrisch geformt oder bilden, in einer anderen Ausführungsform, wenn sie gegeneinander geschoben sind, eine einigermassen ebene Fläche. In der letztgenannten Ausführungsform sind die Trägerelemente durch Distanzelemente voneinander beabstandet. Wenn die Trägerelemente um eine Kurve gefördert werden, reiben die Distanzelemente aneinander und erschweren so die Förderung.

Keine der bekannten Fördervorrichtungen weist die gewünschten Eigenschaften auf.

### DARSTELLUNG DER ERFINDUNG

Es ist Aufgabe der Erfindung, eine Fördervorrichtung mit Schubelementen der eingangs genannten Art zu schaffen, welche eine Übertragung hoher Kräfte erlaubt, und einfach, ohne besondere Anpassungsarbeiten, montiert werden kann. Eine weitere Aufgabe der Erfindung ist, eine Fördervorrichtung zu schaffen, die eine ebene und hoch belastbare Lastfläche ohne Lücken aufweist. Eine weitere Ausführungsform der Erfindung ist, eine Fördervorrichtung zu schaffen, welche als Getriebe zur Übertragung hoher Kräfte um Kurven herum verwendbar ist.

Diese Aufgabe löst eine Fördervorrichtung mit Schubelementen mit den Merkmalen des Patentanspruches 1.

In der Fördervorrichtung mit Schubelementen weist jedes der Schubelemente jeweils mindestens ein Rollenelement und mindestens einen Distanzierungskörper auf, wobei der mindestens eine Distanzierungskörper zur Beabstandung von Schubelementen, welche in der Fördervorrichtung aufeinander folgen, ausgebildet ist. Dabei erstrecken sich aufeinanderfolgende Schubelemente in Förderrichtung von einem ersten Ende zu einem zweiten Ende, und sind die Schubelemente im Bereich des ersten Endes durch das mindestens eine Rollenelement gegenüber einer Förderbahn beweglich gelagert. Im Bereich des zweiten Endes sind die die Schubelemente jeweils an einem anschliessenden Schubelement abgestützt. Es sind aufeinander folgende Schubelemente bezüglich einander nur auf Druck aber nicht auf Zug belastbar.

Die Schubelemente sind also nicht miteinander gekoppelt, und können nur Schubkräfte übertragen. Mit anderen Worten: die Schubelemente liegen lose gegeneinander und können sich, solange sie nicht gegeneinander gestossen werden, voneinander weg bewegen. Dies macht es möglich, die Schubelemente einzeln herzustellen und bereitzustellen. Beim Herstellen der Fördervorrichtung werden die Schubelemente einzeln in eine Förderbahn eingefüllt. Es ist nicht erforderlich, eine Länge eines Bandes oder einer Kette genau auf die Länge der Förderbahn abzustimmen. Es werden beispielsweise gerade so viele Schubelemente wie möglich eingefüllt. Dabei wird, wenn alle anderen Schubelemente gegeneinander geschoben sind, im Normalfall noch eine Lücke zwischen zwei Schubelementen verbleiben. Beim Antreiben der Folge von Schubelementen werden diese zusammengeschoben, und nur gerade vor einem Antrieb kann eine solche Lücke entstehen. Die Fördervorrichtung kann so ausgelegt werden, dass diese Lücke in einem Bereich liegt, wo sie nicht stört.

Die Schubelemente weisen Rollenelemente auf, was die notwendige Kraft zum Antreiben einer Folge von Schubelementen verringert. Ein Schubelement ist nicht an beiden Enden durch beispielsweise Rollen, welche ja Teil des Schubelementes sind, direkt gegenüber der Förderbahn gelagert, sondern nur an einem Ende. Am anderen Ende ist das Schubelement indirekt über ein benachbartes (vorangehendes oder nachfolgendes) Schubelement gegenüber der Förderbahn gelagert. Dadurch, dass die Schubelemente nur an einem Ende gelagert sind, wobei die Schubelemente sich gegenseitig stützen, wird der Rollwiderstand im Vergleich zu mehrachsigen Ausführungen klein gehalten. Der Antrieb kann an den Rollenelementen und/oder an den Distanzierungskörpern und/oder an Trägerelementen der Schubelemente angreifen. Dazu sind diese in bevorzugten Ausführungsformen der Erfindung mit Nocken oder Mitnehmern ausgebildet.

In einer bevorzugten Ausführungsform der Erfindung sind das oder die Rollenelemente bezüglich des mindestens einen Distanzierungskörpers um genau eine gemeinsame geometrische Achse drehbar. Das heisst also, dass zwei oder mehr Rollen, die am ersten Ende des Schubelementes gelagert sind, koaxial zueinander sind. Eine "gemeinsame geometrische Achse" bedeutet in anderen Worten, dass die Rollenelemente um dieselbe Drehachse im geometrischen Sinne drehbar sind. Diese Drehachse kann durch separate physische Achselemente, die miteinander fluchten gebildet sein, oder aber durch eine gemeinsame physische Achse oder eine gemeinsame Welle. Jedes der Schubelemente weist also nur eine Achse auf, um welche sich seine Rollenelemente drehen, und umgekehrt ist also auch das Schubelement um diese Achse bezüglich der Rollenelemente drehbar.

In einer anderen bevorzugten Ausführungsform der Erfindung weisen die Rollenelemente mehr als eine geometrische Achse auf: Vorzugsweise sind jeweils zwei Rollen mit parallelen Achsen am ersten Ende eines Schubelementes angeordnet und sind in der Richtung senkrecht zu der Achsrichtung voneinander beabstandet. Die beiden Rollen drehen sich dabei vorzugsweise im wesentlichen in derselben Ebene. Die Rollen laufen in einer Förderbahn, welche die Schubelemente mit den Rollen umschliesst und am ersten Ende rollend abstützt. Auch hier sind die Schubelemente am zweiten Ende jeweils formschlüssig gegen ein erstes Ende eines benachbarten Schubelementes gestossen. Zwischen dem ersten und dem zweiten Ende weisen die Schubelemente Abstützbereiche auf, welche beim normalen Abrollen fast, aber nicht ganz bis zur Förderbahn reichen. Im Zustand, in welchem die Schubelemente voneinander weg bewegt sind, drehen sich die Schubelemente leicht ab, bis sie durch die Abstützbereiche gleitend an der Förderbahn abgestützt sind. Da die Schubelemente nur beschränkt weggedreht sind, werden sie beim erneuten Aneinanderstossen durch das jeweils benachbarte Schubelement wieder in die korrekte Lage geschoben.

Dasselbe gilt für die Ausführungsformen mit nur einer geometrischen Achse der Rollen: Wenn zwischen zwei Schubelementen, die nicht gegeneinander gestossen werden eine Lücke entsteht, so wird sich das Schubelement aufgrund der Schwerkraft oder aufgrund anderer Kräfte um diese Achse drehen. Wenn die Schubelemente wieder gegeneinander gestossen werden, müssen die Schubelemente wieder in die korrekte gegenseitige Lage gelangen. Zu diesem Zweck weist die Förderbahn Führungsmittel zum losen Führen der Distanzierungskörper auf. Diese Führungsmittel verhindern, dass sich die Schubelemente oder auch nur die Distanzierungskörper zu weit aus der korrekten Position weg drehen.

In einer bevorzugten Ausführungsform der Erfindung weisen die Distanzierungskörper Schubübertragungsflächen auf, welche als Segment einer Zylinderfläche oder Kugelfläche geformt sind, wobei die Zylinderachse mit der Achse zusammenfällt, respektive der Kugelmittelpunkt auf der Achse des jeweiligen Schubelementes liegt. Dies erlaubt, wenn sich die Schubelemente um eine Kurve der Förderbahn bewegen, eine gegenseitige Verdrehung der Distanzierungskörper ohne Änderung des Abstandes zwischen den Achsen der Schubelemente.

In einer weiteren bevorzugten Ausführungsform der Erfindung weisen die Schubelemente jeweils ein Trägerelement zum Fördern von Gegenständen auf. Damit kann eine Fördervorrichtung zum Fördern von Gegenständen erstellt werden, wobei die Gegenstände beispielsweise auf eine flache Oberfläche der Trägerelemente gelegt werden.

In einer weiteren bevorzugten Ausführungsform der Erfindung sind die Trägerelemente von aufeinanderfolgenden Schubelementen korrespondierend zueinander geformt und bewegen sich beim Bewegen der Schubelemente um eine Kurve die Trägerelemente gleitend zueinander, wobei Lastflächen der Trägerelemente gemeinsam eine Oberfläche zum Fördern von Gegenständen bilden. Eine solche Förderfläche ist ähnlich einem Förderband, aber mit viel höherer Belastbarkeit, ohne Durchhängen und ohne dass Stützrollen durch das Band spürbar werden.

In anderen bevorzugten Ausführungsformen der Erfindung weisen die Trägerelemente Mittel zum zeitweisen Festhalten von Gegenständen auf, beispielsweise Greifer.

In einer weiteren bevorzugten Ausführungsform der Erfindung werden die Schubelemente durch ein Antriebsrad angetrieben und treiben selber wiederum ein Abtriebsrad an. Zwischen diesen Rädern kann eine Förderbahn der Schubelemente einen im wesentlichen beliebigen Verlauf aufweisen. Es kann so also ein Getriebe zur Übertragung hoher Kräfte mit einer freien Wahl der Lage der Achsen von Antrieb und Abtrieb realisiert werden.

Weitere bevorzugte Ausführungsformen gehen aus den abhängigen Patentansprüchen hervor.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: zwei Schubelemente in einer Ausführungsform der Erfindung;
- Figur 2-4: verschiedene Ansichten und Schnitte eines Getriebes mit den Schubelementen der Figur 1;
- Figur 5-8: verschiedene Ansichten und Schnitte eines weiteren Getriebes; und
- Figur 9: einen Teil einer Fördervorrichtung mit einem Schubelement mit einem Trägerelement.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

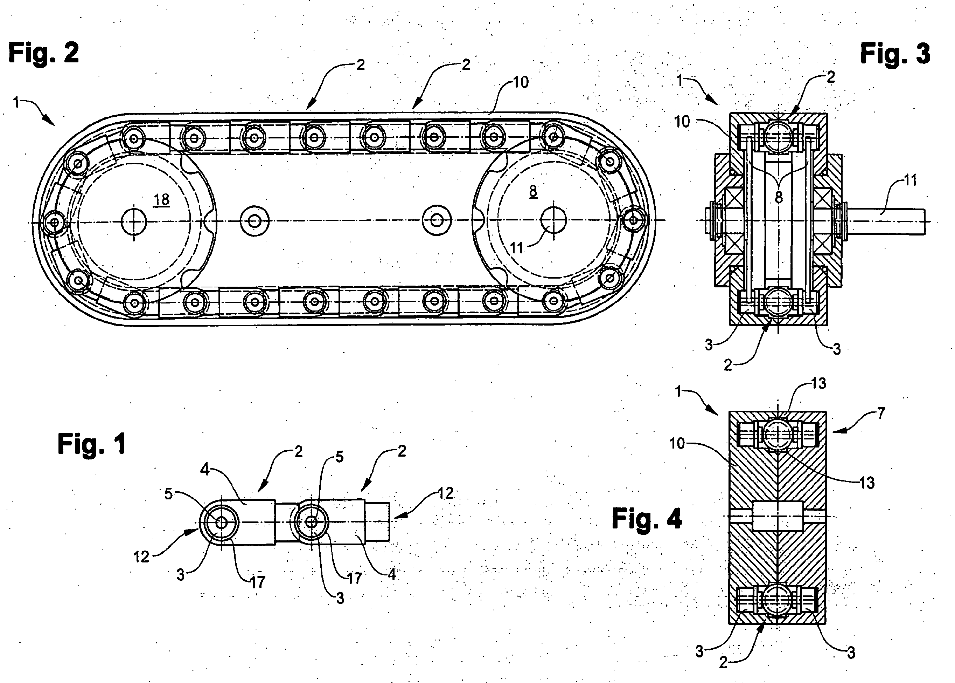

**Figur** 1 zeigt zwei Schubelemente 2 in einer Ausführungsform der Erfindung. Die Schubelemente 2 weisen in Förderrichtung betrachtet einen einzelnen Distanzierungskörper 4 in der Mitte des Schubelementes 2 auf, und links und rechts des Distanzierungskörpers 4 je eine Rolle 3, welche um die Achse 5 drehbar angeordnet ist.

Die Distanzierungskörper 4 sind länglich und weisen Schubübertragungsflächen 12 auf, von denen die einen jeweils als Segment einer Kugelfläche geformt sind, wobei der Kugelmittelpunkt auf der Achse 5 liegt. Die anderen Schubübertragungsflächen 12 sind von der Achse 5 entfernt angeordnet und als Kugelschalen mit gleichem Radius ausgebildet. Diese Ausführungsform ist dadurch vor allem aber nicht ausschliesslich für Bahnen geeignet, deren Krümmungsachsen parallel und/oder senkrecht zu den Achsen 5 verlaufen.

Die Rollen 3 können einzeln auf der Achse 5 gelagert sein, oder an einer gemeinsamen Welle, welche durch den Distanzierungskörper 4 führt, befestigt sein. In einer bevorzugten Ausführungsform der Erfindung weisen die Rollen 3 jeweils einen Spurkranz auf, also einen Abschnitt mit grösserem Radius und mit einer schrägen Flanke 17 zur seitlichen Führung. Damit können die Rollen 3 ähnlich wie bei einer Eisenbahn um eine Kurve geschoben werden, deren Krümmungsachse senkrecht zu den Achsen 5 der Schubelemente 2 verläuft. Anstelle eines Spurkranzes an den Rollen können auch die Distanzierungskörper 4 und/oder die Führungskörper 10 Mittel zur seitlichen Führung aufweisen, beispielsweise Nuten oder hervorstehende Elemente. Die Rollen können zur seitlichen Führung ebenfalls Nuten aufweisen und/oder bombiert, d.h. fassähnlich geformt sein.

**Figuren** 2-4 zeigen verschiedene Ansichten und Schnitte eines Getriebes mit den Schubelementen 2 der **Figur** 1. Hier wirkt die Fördervorrichtung 1 also nicht zum Fördern von weiteren Gegenständen, sondern zum Fördern der Schubelemente 2 selber um eine umlaufende Förderbahn 7, und zur Kraftübertragung über die Schubelemente 2. Dabei wird eines der Umlenkräder als Antriebsrad 8 und das andere als Abtriebsrad 18 verwendet. Die Funktion Antrieb/Abtrieb ist aber auch umkehrbar. In einer anderen Ausführungsform der Erfindung weisen Antriebsrad 8 und Abtriebsrad 18 unterschiedliche Radien auf.

**Figur** 2 zeigt eine Seitenansicht, **Figur** 3 einen Querschnitt im Bereich eines Antriebsrades 8 oder Abtriebsrades 18, und **Figur** 4 einen Querschnitt im dazwischen liegenden Bereich. In **Figur** 4 ist ersichtlich, wie eine Wand der Förderbahn 7 als Führungsfläche 13 wirkt: Falls zwischen zwei Schubelementen 2 eine Lücke entsteht, kann sich der Distanzierungskörper 4 nur soweit wegdrehen, bis das freie Ende, das heisst das von der Achse 5 entfernte Ende, an der Führungsfläche 13 anliegt. Wenn später die Lücke geschlossen wird, drückt die Schubübertragungsfläche 12 des nachfolgenden Schubelementes 2 den Distanzierungskörper 4 wieder in die mittlere Lage, wie sie bei der stossenden Kraftübertragung normal ist.

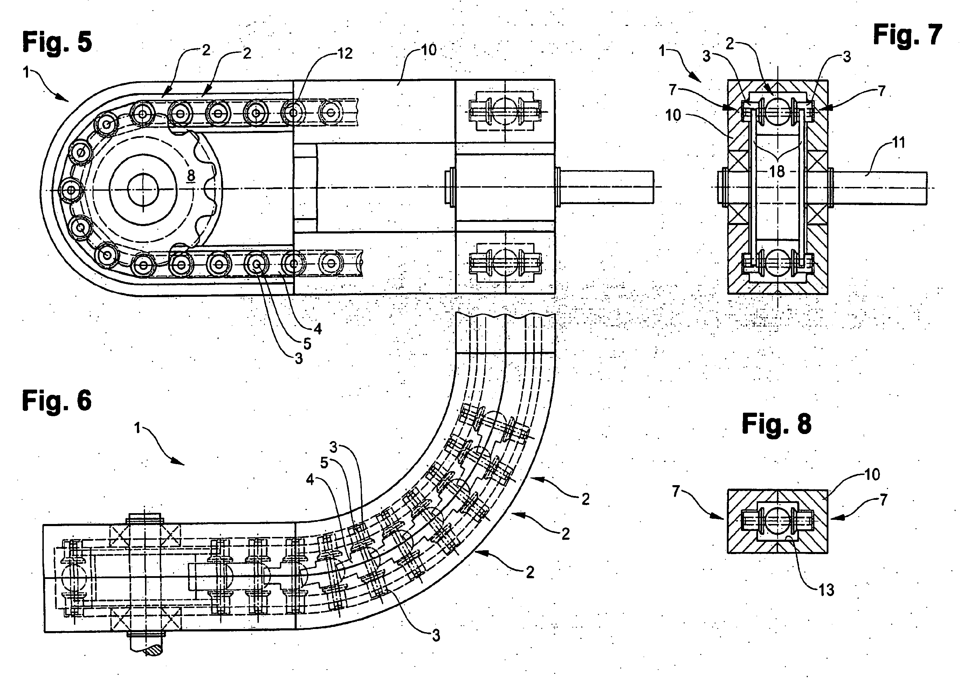

**Figuren** 5-8 zeigen verschiedene Ansichten und Schnitte eines weiteren Getriebes. Das Wirkprinzip ist dasselbe wie bei der Ausführungsform gemäss den **Figuren** 2 - 4, jedoch ist hier eine Führung um zwei verschiedene Krümmungsachsen illustriert. Die Achsen von Antriebsrad 8 und Abtriebsrad 18 sind also nicht parallel zueinander. **Figur** 5 zeigt eine Seitenansicht des Getriebes, **Figur** 6 eine teilweise Aufsicht, **Figur** 7 einen Querschnitt im Bereich eines Umlenk-oder Abtriebsrades 18, und **Figur** 8 einen Querschnitt im dazwischen liegenden Bereich. Im Prinzip kann ein solches Getriebe mit stossenden Schubelementen 2 auch mit Schubelementen 2 ohne Rollen 3 realisiert werden, wobei Antriebsrad 8 und Abtriebsrad 18 an den Schubelementen selber angreifen.

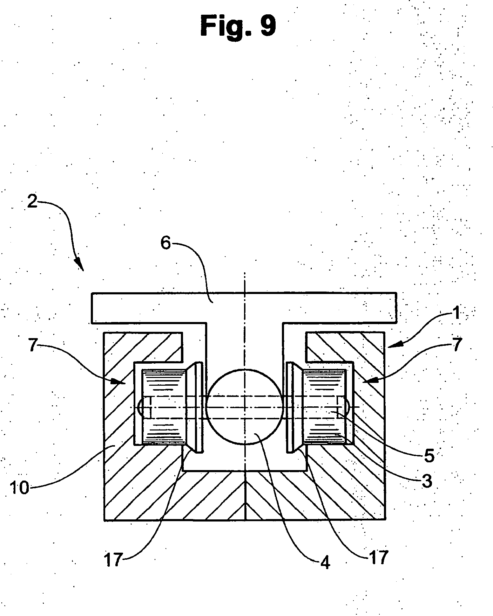

**Figur** 9 zeigt einen Teil einer Fördervorrichtung 1 mit einem Schubelement 2 mit einem Trägerelement 6. Das Trägerelement 6 ist am Distanzierungskörper 4 befestigt oder mit diesem einstückig ausgebildet. Der Führungskörper 10 weist einen umlaufenden Schlitz auf, durch welchen sich das Trägerelement 6 nach aussen erstreckt. In einer bevorzugten Ausführungsform der Erfindung ist die Förderbahn 7 nur um eine Achse senkrecht zu den Achsen 5 gekrümmt. Die Förderbahn 7 kann grundsätzlich auch beliebige räumliche Krümmungen in alle Richtungen und Verdrehungen respektive Tordierungen aufweisen. Die Distanzierungskörper 4 weisen eine zylindrische Schubübertragungsfläche 12 auf, deren Zylinderachse parallel zu den Krümmungsachsen verläuft, und die Trägerelemente 6 weisen erste Kontaktflächen 14 auf, die ebenfalls zylindrisch mit der Zylinderachse parallel zu den Krümmungsachsen sind.

### BEZUGSZEICHENLISTE

- 1: Fördervorrichtung
- 2: Schubelement

- 3: Rolle
- 4: Distanzierungskörper
- 5: Achse
- 6: Trägerelement
- 7: Förderbahn
- 8: Antriebsrad
- 9: Ausnehmung
- 10: Führungskörper
- 11: Antriebswelle

- 12: Schubübertragungsfläche
- 13: Führungsfläche
- 14: erste Kontaktfläche
- 15: zweite Kontaktfläche
- 16: Lastfläche
- 17: Flanke
- 18: Abtriebsrad

## Patentansprüche

1. Fördervorrichtung (1) zum Fördern von einzelnen Schubelementen (2), **dadurch gekennzeichnet, dass** jedes der Schubelemente (2) jeweils mindestens ein Rollenelement (3) und mindestens einen Distanzierungskörper (4) aufweist, wobei der mindestens eine Distanzierungskörper (4) zur Beabstandung von Schubelementen (2), welche in der Fördervorrichtung (1) aufeinander folgen, ausgebildet ist, und wobei sich aufeinanderfolgende Schubelemente (2) in Förderrichtung von einem ersten Ende zu einem zweiten Ende erstrecken, und die Schubelemente (2) im Bereich des ersten Endes durch das mindestens eine Rollenelement (3) gegenüber einer Förderbahn (7) beweglich gelagert sind, und die Schubelemente (2) im Bereich des zweiten Endes an einem anschliessenden Schubelement (2) abgestützt sind, und dass aufeinander folgende Schubelemente (2) bezüglich einander nur auf Druck aber nicht auf Zug belastbar sind, **dadurch gekennzeichnet, dass** in Förderrichtung betrachtet ein Distanzierungskörper (4) in der Mitte des Schubelementes (2) angeordnet ist und links und rechts des Distanzierungskörpers (4) je eine Rolle (3) um eine Achse (5) drehbar angeordnet ist, wobei jedes der Schubelemente nur eine solche Achse (5) mit Rollen (3) aufweist.

2. Fördervorrichtung (1) gemäss Anspruch 1, **dadurch gekennzeichnet, dass** die Schubübertragungsflächen (12) des Distanzierungskörpers (4) auf der einen Seite als Kugelflächen und auf der anderen Seite als Kugelschalen ausgebildet sind, und der Mittelpunkt der Kugelflächen jeweils auf der Achse (5) liegt.

3. Fördervorrichtung (1) gemäss Anspruch 1 oder 2, **dadurch gekennzeichnet, dass** die Rollen (3) jeweils einen Abschnitt mit einer schrägen Flanke (17) zur seitlichen Führung aufweisen.

4. Fördervorrichtung (1) gemäss einem der Ansprüche 1 bis 3, **dadurch gekennzeichnet, dass** die Fördervorrichtung (1) als Getriebe zum Übertragen von Kraft von einem Antriebsmittel (8) auf ein Abtriebsmittel (18) ausgebildet ist, wobei ein Satz von Schubelementen (2) durch die Fördervorrichtung (1) um eine umlaufende Förderbahn (7) geführt ist und die Schubelemente (2) dabei zeitweise mit dem Antriebsmittel (8) und dem Abtriebsmittel (18) im Eingriff sind.

5. Fördervorrichtung (1) gemäss einem der Ansprüche 1 bis 4, **dadurch gekennzeichnet, dass** die Förderbahn (7) Führungsmittel (13) zum losen Führen der Distanzierungskörper (4) aufweist, so dass bei Schubelementen (2), die sich voneinander wegbewegt haben, beim erneuten gegeneinander Bewegen die Distanzierungskörper (4) in die korrekte Position zur Schubübertragung gelangen, und in dieser Position aufeinander abgestützt sind.

6. Schubelement (2), zur Verwendung in der Fördervorrichtung (1) gemäss einem der bisherigen Ansprüche.

## Claims

1. Conveying device (1) for conveying individual pusher elements (2), **characterised in that** every pusher element (2) respectively comprises at least one roller element (3) and at least one spacer body (4), wherein the at least one spacer body (4) is designed for spacing pusher elements (2), which in the conveying device (1) follow one another, and wherein successive pusher elements (2) in the conveying direction extend from a first end to a second end, and the pusher elements (2) in the zone of the first end are movably supported by the at least one roller element (3) relative to the conveying track (7), and the pusher elements (2) in the zone of the second end are supported on a following pusher element (2), and that successive pusher elements (2) can only bear pressure, and not tension, in relation to each other, **characterised in that**, as seen in conveying direction, a spacer body (4) is arranged in the centre of the pusher element (2) and a roller (3) rotatable around an axis (5) is arranged on each side of the spacer body (4), wherein each pusher element comprises only one such axis (5) with rollers.

2. Conveying device (1) in accordance with claim 1, **characterised in that** push transmitting surfaces (12) of the spacer body (4) are designed on one side as spherical surfaces and on the other side as spherical shells, and in each case the centre of the spherical surface lies upon the axis (5).

3. Conveying device (1) in accordance with claim 1 or 2, **characterised in that** each roller (3) comprises a section with a flank (17) slanting away from the lateral guidance.

4. Conveying device (1) in accordance with claim 1 to 3, **characterised in that** the conveying device (1) is designed as a gear mechanism for transmitting force from a drive means (8) to a power take-off means (18), wherein a set of pusher elements (2) is guided through the conveying device (1) around a rotary conveying track (7) and in this process the pusher elements (2) intermittently engage with the drive means (8) and with the power take-off means (18).

5. Conveying device (1) in accordance with any claim 1 to 4, **characterised in that** the conveying track (7) comprises guide means (13) for the loose guiding of the spacer bodies (4), so that when pusher elements (2), after moving away from each other, move toward each other once more, the spacer bodies (4) attain the correct position for the push transmitting, and in this position support each other.

6. Pusher element (2) for use in the conveying device (1) in accordance with any one of the previous claims.

## Revendications

1. Dispositif de transport (1) destiné à transporter des éléments de poussée (2) séparés, dans lequel
chacun des éléments de poussée (2) présente au moins un élément de galet (3) et au moins un corps d'écartement (4),
le ou les corps d'écartement (4) sont configurés pour maintenir à distance des éléments de poussée (2) situés l'un à la suite de l'autre dans le dispositif de transport (1),
des éléments de poussée (2) qui se suivent l'un l'autre dans la direction du transport s'étendent d'une première extrémité à une deuxième extrémité,
dans la zone de leur première extrémité, les éléments de poussée (2) sont montés à déplacement par le ou les éléments de galet (3) sur une piste de transport (7),
dans la zone de la deuxième extrémité, les éléments de poussée (2) sont soutenus sur un élément de poussée (2) adjacent et
des éléments de poussée (2) successifs peuvent être sollicités l'un par l'autre uniquement en poussée mais non en traction,
**caractérisé en ce que**
vu dans la direction du transport, un corps d'écartement (4) est disposé au milieu de l'élément de poussée (2),
**en ce qu'**un galet (3) apte à tourner autour d'un axe (5) est disposé à gauche et un autre à droite du corps d'écartement (4) et
**en ce que** chacun des éléments de poussée ne présente qu'un seul de ces axes (5) de galet (3).

2. Dispositif de transport (1) selon la revendication 1, **caractérisé en ce que** les surfaces (12) de transfert de poussée du corps d'écartement (4) sont configurées d'un côté comme surface sphérique et de l'autre côté comme coquille sphérique, le point central des surfaces sphériques étant situé sur un axe (5) respectif.

3. Dispositif de transport (1) selon les revendications 1 ou 2, **caractérisé en ce que** les galets (3) présentent tous une partie dotée d'un flanc oblique (17) permettant un guidage latéral.

4. Dispositif de transport (1) selon l'une des revendications 1 à 3, **caractérisé en ce que** le dispositif de transport (1) est configuré comme transmission qui transfère la force d'un moyen d'entraînement (8) à un moyen entraîné (18), **en ce qu'**un jeu d'éléments de poussée (2) est guidé dans le dispositif de transport (1) sur d'une piste de transport (7) en boucle fermée et **en ce que** les éléments de poussée (2) sont engagés une partie du temps avec le moyen d'entraînement (8) et une partie du temps avec le moyen entraîné (18).

5. Dispositif de transport (1) selon l'une des revendications 1 à 4, **caractérisé en ce que** la piste de transport (7) présente des moyens de guidage (13) qui guident lâchement les corps d'écartement (4) de telle sorte que lorsque des éléments de poussée (2) qui se sont écartés les uns des autres se déplacent de nouveau l'un vers l'autre, les corps d'écartement (4) passent dans la position correcte de transfert de poussée et se soutiennent mutuellement dans cette position.

6. Elément de poussée (2) destiné à être utilisé dans le dispositif de transport (1) selon l'une des revendications précédentes.
